# EUROPÄISCHE PATENTSCHRIFT

(11) **EP 2 788 725 B1**
(45) Veröffentlichungstag und Bekanntmachung des Hinweises auf die Patenterteilung: **18.09.2019**
(21) Anmeldenummer: 12801478.4
(22) Anmeldetag: 22.11.2012
(51) Int. Cl.: G01F 1/60, G01F 1/58

(54) **VERFAHREN UND SCHALTUNG ZUR NETZSYNCHRONISATION EINES MAGNETISCH-INDUKTIVEN DURCHFLUSSMESSGERÄTS**
METHOD AND CIRCUIT FOR THE MAINS SYNCHRONISATION OF A MAGNETIC-INDUCTIVE FLOW MEASUREMENT DEVICE
PROCÉDÉ ET CIRCUIT DE SYNCHRONISATION RÉSEAU D'UN DÉBITMÈTRE MAGNÉTO-INDUCTIF

(30) Priorität: 06.12.2011 DE 102011087827
(43) Veröffentlichungstag der Anmeldung: 15.10.2014
(73) Patentinhaber: Endress+Hauser Flowtec AG, 4153 Reinach (CH)
(72) Erfinder: BRUDERMANN, Matthias, CH-4313 Moehlin (CH)
(74) Vertreter: Andres, Angelika Maria
(86) Internationale Anmeldenummer: PCT/EP2012/073306
(87) Internationale Veröffentlichungsnummer: WO 2013/083408

(56) Entgegenhaltungen:
- EP-A1- 0 244 807
- EP-A1- 0 846 935
- EP-A1- 2 060 878

## Beschreibung

Die vorliegende Erfindung betrifft ein Verfahren und eine Schaltung zur Netzsynchronisation eines magnetisch-induktiven Durchflussmessgeräts mit einem Messaufnehmer und einem Netzteil, wobei ein Gleichstromsignal zur Versorgung des Messaufnehmers vom Netzteil zum Messaufnehmer über zwei Signalleiter übertragen wird.

Kompakte magnetisch-induktive Durchflussmessgeräte mit einem Versorgungsnetzanschluss, beispielsweise eines 50 Hz 230 Volt AC-Netzes, weisen üblicherweise Mittel zur Netzsynchronisation auf, um mögliche Störungen durch das Netz auszufiltern. Beispielsweise weist die Übertragungsfunktion der Signalverarbeitung des magnetisch-induktiven Durchflussmessgeräts eine Nullstelle bei der Netzfrequenz, beispielsweise bei exakt 50 Hz, auf. Dazu wird die Integrationszeit der Messelektrodensignale mit der Netzfrequenz synchronisiert. Eine Störung durch das Netz würde entsprechend herausgefiltert und die Messsignalqualität entscheidend verbessert. Kompakte magnetisch-induktive Durchflussmessgeräte generieren ein Netzsynchronisationssignal direkt im Netzteil, welches meist Bestandteil des Messumformers ist, wo die Messsignale und das Netzsynchronisationssignal verarbeitet werden. Für abgesetzte magnetisch-induktive Durchflussmessgeräte muss das Netzsynchronisationssignal jedoch vom Messumformer mit Netzteil zum entfernt angeordneten Messaufnehmer übertragen werden. Die Entfernung kann dabei mehrere hundert Meter betragen. Zur Übertragung des Netzsynchronisationssignals vom Messumformer mit Netzteil zum örtlich getrennt angeordneten Messaufnehmer könnten beispielsweise zwei extra dafür verwendete Kabel vorgesehen sein.

Die EP 2 060 878 A1 offenbart ein magnetisch-induktives Durchflussmessgerät in welcher eine AC-Frequenz einer kommerziellen Energieversorgung jeweils die Stromrate in den Anregungsspulen bestimmt als auch die Rate mit welcher Durchfluss-Signale zwischen den Messelektroden aufgenommen werden

Die Aufgabe der Erfindung besteht darin, ein Verfahren vorzuschlagen, welches eine jitterfreie Übertragung eines Synchronisationssignals über ein Kabel zu einem abgesetzten Messaufnehmer ermöglicht.

Die Aufgabe wird gelöst durch den Gegenstand der unabhängigen Ansprüche 1 und 6. Weiterbildungen und Ausgestaltungen der Erfindung finden sich in den Merkmalen der abhängigen Ansprüche wieder.

Zur erfindungsgemäßen Netzsynchronisation umfasst ein magnetisch-induktives Durchflussmessgerät einen Messaufnehmer und ein Netzteil. Das Netzteil ist beispielsweise Teil eines Messumformers, welcher insbesondere vom Messaufnehmer abgesetzt ist, d.h. der Messumformer ist vom Messaufnehmer örtlich getrennt angeordnet. Diese Trennung kann mehrere hundert Meter betragen. Zur Versorgung des Messaufnehmers wird ein Gleichstromsignal vom Netzteil zum Messaufnehmer über zwei Signalleiter übertragen.

Das magnetisch-induktive Durchflussmessgerät wird dabei vom Versorgungsnetz gespeist. Das Netzteil des magnetisch-induktiven Durchflussmessgeräts ist dabei an dieses angeschlossen und wandelt das Netzsignal, insbesondere ein Wechselstromsignal, in ein Gleichstromsignal. In Deutschland ist das Versorgungsnetz ein Wechselstromnetz mit 230 Volt Netzspannung und 50 Hz Netzfrequenz. In den Vereinigten Staaten von Amerika beträgt die Netzfrequenz dagegen 60 Hz. Das Netzteil versorgt auch den Messumformer mit Energie.

Erfindungsgemäß wird netzteilseitig, also beispielsweise in dem Netzteil, ein differentielles Synchronisationssignal zur Synchronisation der Durchflussmessung mittels des Messaufnehmers mit der Netzfrequenz erzeugt. Anschließend wird dieses differentielle Synchronisationssignal über die zwei Signalleiter zum Messaufnehmer übertragen, über welche bereits das Gleichstromsignal zur Versorgung des Messaufnehmers übertragen wird. Das differentielle Synchronisationssignal wird auf das Gleichstromsignal aufmoduliert. Dadurch lässt sich ein extra Kabel zur separaten Übertragung von Gleichstromsignal und Synchronisationssignal sparen.

Messaufnehmerseitig wird dann das differentielle Synchronisationssignal wieder vom Gleichstromsignal getrennt und entsprechend zur Synchronisation der Durchflussmessung mit der Netzfrequenz weiterverarbeitet, insbesondere im Messaufnehmer.
Ein differentielles Signal im Allgemeinen und das differentielle Synchronisationssignal im Speziellen bestehen aus einem invertierten und einem nichtinvertierten Signal, beispielsweise einem Spannungs- oder Stromsignal. Das invertierte Signal ist zu jedem Zeitpunkt Betragsgleich mit dem nichtinvertierten Signal, weist aber das umgekehrte Vorzeichen auf.

Eine erfindungsgemäße Schaltung zur Ausführung des erfindungsgemäßen Verfahrens weist daher netzteilseitig Mittel auf, ein Synchronisationssignal zur Synchronisation der Durchflussmessung mittels des Messaufnehmers mit der Netzfrequenz des Versorgungsnetzes zu erzeugen. Das Netzteil ist dabei insbesondere Teil eines Messumformers, welcher vom Messaufnehmer abgesetzt ist. Des Weiteren umfasst die Schaltung Mittel, welche geeignet sind, netzteilseitig ein differentielles Synchronisationssignals zur Synchronisation der Durchflussmessung mit der Netzfrequenz zu erzeugen und Mittel, das differentielle Synchronisationssignal auf die zwei Signalleiter zum Messaufnehmer zu übertragen. Darüber hinaus umfasst die Schaltung messaufnehmerseitig Mittel, um das differentielle Synchronisationssignals und das Gleichstromsignal voneinander zu trennen und Mittel zur Verarbeitung des differentiellen Synchronisationssignals zur Synchronisation der Durchflussmessung mit der Netzfrequenz.

Insbesondere erzeugen die Mittel netzteilseitig zueinander invertierte Impulssignale, welche über weitere Mittel auf das Gleichstromsignal aufgeprägt werden und über die zwei Signalleiter, insbesondere ein Kabel, insbesondere ein Twisted Pair Kabel (TP), welches insbesondere abgeschirmt ist, übertragen und messaufnehmerseitig mittels weiteren Mitteln wieder getrennt werden.

Ein weiterer Vorteil der Erfindung ist, dass kein zusätzlicher Jitter auf das Synchronisationssignal durch eine erfindungsgemäße Schaltung aufgeprägt wird.

Gemäß einer ersten Weiterbildung des erfindungsgemäßen Verfahrens gehen der Erzeugung des differentiellen Synchronisationssignals folgende Verfahrensschritte voraus: Erzeugen eines Rechteck-Spannungssignals und Erzeugen eines differentiellen Spannungssignals als differentielles Synchronisationssignal mit Impulsen anstelle der Flanken des Rechteck-Spannungssignals. Das differentielle Synchronisationssignal besteht somit aus einem invertierten und einem nichtinvertierten Impuls-Spannungssignals. Die Impulse des Impuls-Spannungssignals werden zeitgleich zu den Flanken des Rechteck-Spannungssignals und damit in Phase mit dem Rechteck-Spannungssignal bzw. dem Netzsignal erzeugt.

Schwankt die Netzfrequenz, so verändert sich auch das Synchronisationssignal in gleichem Maße. Beispielsweise wird ein Impuls des differentiellen Synchronisationssignals, respektive wird eine Flanke des Rechteck-Spannungssignals, bei jedem Nulldurchgang eines sinusförmigen Netzsignals erzeugt. Es sind jedoch auch andere Arten der Synchronisierung denkbar.

Gemäß einer Weiterbildung der Erfindung weist eine erfindungsgemäße Schaltung dazu Mittel auf, ein Rechteck-Spannungssignal synchron zur Netzfrequenz zu erzeugen und das differentielle Synchronisationssignal als differentielles Spannungssignal mit Impulsen anstelle der Flanken des Rechteck-Spannungssignals zu erzeugen. Flanken des Rechtecks werden beispielsweise bei einem Nulldurchgang des Netzsignals erzeugt. Es können aber auch nur ansteigende Flanken bei einem positiven Nulldurchgang des Netzsignals erzeugt werden, d.h. in dem Augenblick, wenn das Netzsignal negativ ist und positiv wird, und die Zeit bis zur fallenden Flanke ist vorgegeben, insbesondere konstant. Das Impuls-Pausen-Verhältnis beträgt gemäß einem Ausführungsbeispiel 1:1 und die Frequenz ist gleich der Netzfrequenz. Das genannte Impuls-Pausen-Verhältnis ist aber, wie die Frequenzgleichheit, nicht erfindungswesentlich. So könnte bei einem 50Hz Netzsignal jede Halbwelle eine Flanke auslösen und somit die Frequenz des Synchronisationssignals 100 Hz betragen. In jedem Fall sind das Netzsignal, das differentielle Synchronisationssignal und gegebenenfalls das Rechteck-Spannungssignal miteinander synchronisiert. Eine erfindungsgemäße Schaltung weist entsprechend dazu geeignete Mittel auf, das differentielle Synchronisationssignal als differentielles Spannungssignal mit Impulsen zeitgleich zu den Flanken des Rechteck-Spannungssignals zu erzeugen.

Das Rechteck-Spannungssignal wird mit einer aus dem Stand der Technik bekannten Optokopplerschaltung erzeugt. Beispielsweise handelt es sich bei dem Rechteck-Spannungssignal um ein TTL-Signal, z.B. von 0 bis 3 Volt oder von 0 bis 5 Volt.

Gemäß einer weiteren Weiterbildung der Erfindung umfasst eine erfindungsgemäße Schaltung einen EIA-485-Transmitter, gelegentlich auch als RS 485 Transmitter oder differentielle Treiberstufe bezeichnet, und jeweils einen Kondensator zwischen dem EIA-485-Transmitter und jeweils einem Signalleiter als Mittel zur Erzeugung des differentiellen Synchronisationssignals als differentielles Impuls-Spannungssignal mit Impulsen anstelle von Flanken des Rechteck-Spannungssignals. Wie bereits erwähnt, werden die Impulse des differentiellen Impuls-Spannungssignal zeitgleich mit den ansteigenden Flanken oder zeitgleich mit den fallenden Flanken oder zeitgleich mit ansteigenden und fallenden Flanken des Rechteck-Spannungssignals erzeugt.

Dazu invertiert der EIA-485-Transmitter zunächst das Rechteck-Spannungssignal als Eingangssignal und gibt dieses invertierte Rechteck-Spannungssignal über einen ersten Ausgang aus. Zusätzlich wird das Rechteck-Spannungssignal als Eingangssignal nichtinvertiert über einen zweiten Ausgang ausgegeben. Jedes andere gleichwirkende Bauteil, insbesondere elektronische Bauteil gleicher Funktionalität, kann diesen technischen Effekt gleichermaßen verursachen und gilt damit als Äquivalent.

Das nun differentielle Rechteck-Spannungssignal wird anschließend an zwei Kondensatoren angelegt. Jeweils ein Kondensator ist zwischen einem Ausgang des EIA-485-Transmitters und einem der beiden Signalleiter angeordnet. Jeder der beiden Kondensatoren erzeugt einen positiven Spannungsimpuls bei einer aufsteigenden Flanke des Rechteck-Spannungssignals und einen negativen Spannungsimpuls bei einer abfallenden Flanke des Rechteck-Spannungssignals, welche auf das Gleichstromsignal überlagert werden. Durch die differentielle Natur des Rechteck-Spannungssignals werden daher zwei Impuls-Spannungssignale erzeugt, wobei das eine invertiert zu einem anderen ist. Es liegt somit ein differentielles Impuls-Spannungssignal an den Kondensatoren an.

In einer Ausführungsform der Erfindung weisen die beiden Kondensatoren eine Kapazität von jeweils 100nF bis 100µF auf, insbesondere von jeweils 100n F bis 1µF.
Nach der Übertragung über die zwei Signalleiter werden das differentielle Synchronisationssignal und das Gleichstromsignal erfindungsgemäß voneinander getrennt. Anschließend werden die Signale getrennt voneinander weiterverarbeitet.

Zur Trennung weist die Schaltung zumindest eine Spule an jedem Ende der Signalleiter, jeweils nach dem Ausgang des Netzteils und vor dem Eingang in den Messaufnehmer, auf, wobei dazwischen die weiteren Schaltungskomponenten netzteilseitig und messaufnehmerseitig angeordnet sind. Das magnetisch-induktive Durchflussmessgerät umfasst ein Netzteil, beispielsweise als Teil eines Messumformers, zwei Signalleiter und einen Messaufnehmer, wobei das Netzteil über die zwei Signalleiter mit dem Messaufnehmer verbunden ist, um ein Gleichstromsignal zur Versorgung des Messaufnehmers vom Netzteil zum Messaufnehmer zu übertragen.

Die Spulen weisen dabei eine Induktivität von jeweils 100µH bis 100mH, insbesondere von 1mH bis 10mH auf.

Weitergebildet wird zur Verarbeitung des differentiellen Synchronisationssignals zur Synchronisation der Durchflussmessung mit der Netzfrequenz folgender Verfahrensschritt durchgeführt, welcher dann gegebenenfalls der Erzeugung des Rechteck-Spannungssignals mit Flanken anstelle der Impulse des differentiellen Spannungssignals vorangeht:
Filterung des differentiellen Synchronisationssignals mit einem Tiefpassfilter, welches so eingestellt ist, dass Impulse mit einer Frequenz oberhalb eines vorgegebenen ersten Schwellwerts, welcher insbesondere seinerseits von der erwarteten Netzfrequenz abhängt, aus dem Synchronisationssignal herausgefiltert werden.

Daneben kann auch das differentielle Synchronisationssignals mit einem Hochpassfilter gefiltert werden, welches Hochpassfilter so eingestellt ist, dass Impulse mit einer Frequenz unterhalb eines vorgegebenen zweiten Schwellwerts, welcher beispielsweise seinerseits von der erwarteten Netzfrequenz abhängt, aus dem Synchronisationssignal herausgefiltert werden. Tief- und Hochpassfilter bilden gemeinsam einen Bandpassfilter. Der erste Schwellwert liegt dabei höher als der zweite Schwellwert. Bei einer erwarteten Netzfrequenz von 50 Hz liegt das durch den ersten und zweiten Schwellwert gebildete Band beispielsweise bei 40 bis 60 Hz oder gar nur bei 48 bis 52 Hz. Selbstverständlich kann auch zunächst das, wie nachfolgend beschrieben, anschließend gebildete Rechteck-Spannungssignal zur Synchronisation gefiltert werden. Ein Tief-, Hoch- oder Bandpassfilter wird beispielsweise durch eine Software realisiert.

Gemäß einer Weiterbildung der erfindungsgemäßen Schaltung ist der Tiefpass gebildet aus parallel geschalteten Kondensatoren und Widerständen, welche so verschaltet sind, dass sie ein Tiefpassglied bilden.

Anschließend wird gemäß einer Weiterbildung der Erfindung das differentielle Synchronisationssignals zur Synchronisation der Durchflussmessung mit der Netzfrequenz verarbeitet, indem ein Rechteck-Spannungssignal mit Flanken anstelle der Impulse des differentiellen Spannungssignals erzeugt wird. Die Flanken des so erzeugten Rechteck-Spannungssignals sind analog zur Erzeugung des Impuls-Spannungssignals in Phase mit den Impulsen des Impuls-Spannungssignals, da sie zeitgleich zu diesen erzeugt werden.

Zur Erzeugung des Rechteck-Spannungssignals wird beispielsweise ein Differenzverstärker, z.B. Operationsverstärker oder RS485 Transceiver, mit differentiellen Eingängen verwendet, insbesondere mit zumindest einem Kondensator zwischen jedem Eingang des Operationsverstärkers und einem der Signalleiter.

Zusätzlich kann ein Mono-Flop als digitales Gatter Verwendung finden, welches insbesondere mit dem Ausgang des Operationsverstärkers verschaltet ist.

Des Weiteren kann die erfindungsgemäße Schaltung eine Recheneinheit aufweisen, welche geeignet ist, mittels einer Software das Synchronisationssignal nur zu erwarteten Zeitpunkten einzublenden und ansonsten ein vorgegebenes Signal, beispielsweise eine konstante Spannung, insbesondere von 0 Volt, auszugeben. Das Synchronisationssignal, beispielsweise das Rechteck-Spannungssignal oder aber auch das differentielle Synchronisationssignal werden somit quasi nochmals bandpassgefiltert. Die Zeitdauer zwischen den Perioden oder Fenstern, in denen das Synchronisationssignal ausgeblendet wird, ist vorgegeben und orientiert sich insbesondere an der erwarteten Netzfrequenz und dem vorliegenden Synchronisationssignal, und ist damit genau so einstellbar, wie die Länge der Perioden oder Fenster, in welchen das Synchronisationssignal eingeblendet und damit zur Weiterverarbeitung ausgegeben wird.

Gemäß einem weiterem Ausgestaltungsbeispiel der Erfindung ist ein Twisted-Pair Kabel zur Übertragung des Gleichstromsignals und des Synchronisationssignals vorgesehen, in welchem die zwei Signalleiter miteinander verdrillt sind. Das Twisted-Pair Kabel weist dabei insbesondere einen elektrisch leitenden Schirm auf.

Jede erfindungsgemäße Schaltung ist geeignet, das erfindungsgemäße Verfahren auszuführen.

Die Erfindung lässt zahlreiche Ausführungsformen zu. Einige davon sind nachfolgend anhand der Figuren näher erläutert werden. Gleiche Elemente sind in den Figuren mit gleichen Bezugszeichen versehen.
- Fig. 1: zeigt eine erfindungsgemäße Schaltung zur Netzsynchronisation,
- Fig. 2: zeigt mehrere Signalverläufe aufgetragen über die Zeit.

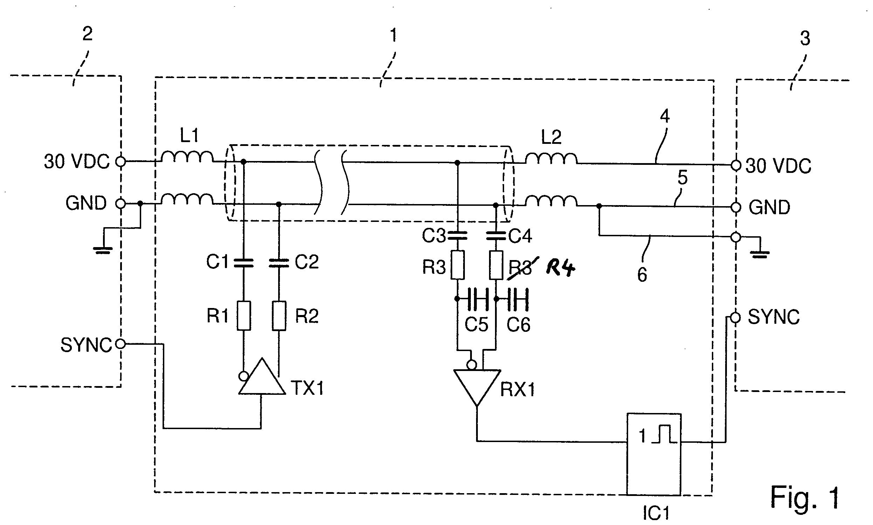

In Fig. 1 ist eine erfindungsgemäße Schaltung 1 zur Netzsynchronisation dargestellt. Ein Netzteil 2 wandelt ein Netzsignal hier beispielsweise ein Wechselstromsignal mit 230 Volt Netzspannung und 50 Hz Netzfrequenz, in ein Gleichstromsignal, hier mit 30 Volt. Das Gleichstromsignal wird über zwei Signalleiter 4 und 5 zum Messaufnehmer 3 übertragen. Die zwei Signalleiter 4 und 5 sind an den Ausgängen 30VDC und GND des Netzteils 2 und des Messaufnehmers 3 angeschlossen. Der Anschluss des Netzteils an das Versorgungsnetz ist ebenso nicht gezeichnet, wie dass das Netzteil 2 Teil eines Messumformers des magnetisch-induktiven Durchflussmessgeräts ist.

Das Netzteil 2 erzeugt neben dem Gleichstromsignal ein Synchronisationssignal zur Synchronisation der Durchflussmessung mittels des Messaufnehmers mit der Netzfrequenz. Das Synchronisationssignal liegt am Ausgang SYNC des Netzteils 2 an und wird dort ausgegeben. Das Synchronisationssignal wird gemäß dem Stand der Technik als Rechteck-Spannungssignal synchron zum Netzsignal erzeugt. Es weist insbesondere dieselbe Frequenz des Netzsignals auf, wobei es beispielsweise aufsteigende Flanken zeitgleich mit einem Nulldurchgang vom Negativen ins Positive des Netzsignals aufweist. Jittert das Netzsignal, so jittert das Rechteck-Spannungssignal gleichermaßen.

Nun weist der Messaufnehmer 3 einen Eingang SYNC auf, welcher ein solches Rechteck-Spannungssignal zur Synchronisation der Durchflussmessung mit dem Netzsignal verarbeiten kann. Die Übertragung eines solchen Rechteck-Spannungssignals ist jedoch nachteilig.

Daher weist die hier veranschaulichte Schaltung 1 erfindungsgemäß Mittel auf, das Rechteck-Spannungssignal in ein differentielles Impuls-Spannungssignal als Synchronisationssignal zu wandeln. Hier umfassen diese Mittel einen EIA-485-Transmitter TX1 und zwei Kondensatoren C1 und C2 und zwei Widerstände R1 und R2, wobei jeweils ein Kondensator C1 und C2 und jeweils ein Widerstand R1 und R2 in Reihe geschaltet und zwischen einem Ausgang des EIA-485-Transmitter TX1 und einem der Signalleiter 4 und 5 angeordnet und mit diesen elektrisch leitend, insbesondere galvanisch, verbunden sind.

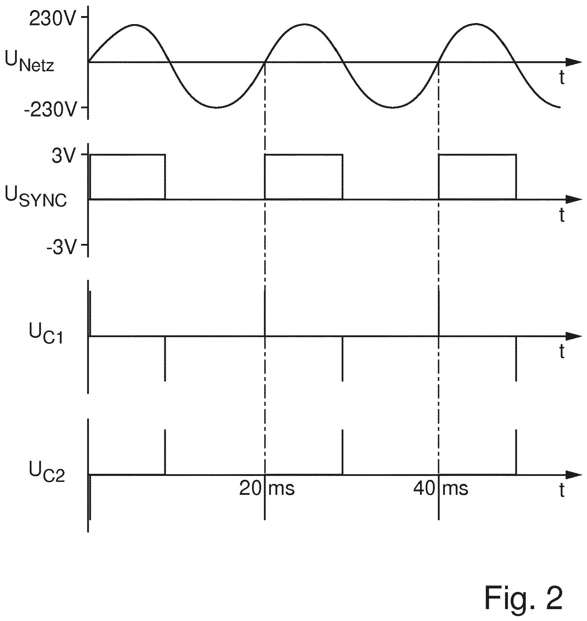

Das Rechteck-Spannungssignal, welches am Eingang des EIA-485-Transmitters TX1 anliegt, wird von diesem nichtinvertiert und invertiert ausgegeben. Die Signalverläufe sind in Fig. 2 skizziert. Anschließend wird das nun differentielle Rechteck-Spannungssignal in ein differentielles Impuls-Spannungssignal von den in Reihe geschalteten Kondensatoren C1 und C2 und Widerständen R1 und R2 gewandelt, welches anschließend auf die zwei Signalleiter 4 und 5 aufmoduliert wird. Die Kondensatoren C1 und C2 dienen der kapazitiven Kopplung, die Widerstände R1 und R2 dienen zur Amplitudenbegrenzung, oder anders ausgedrückt zur Dämpfung, des Synchronisationssignals, so dass gewährleistet ist, eine maximale Amplitude des über den Signalleiter 4 übertragenen Signals nicht zu überschreiten.

Somit ist kein zusätzliches Kabel zur Übertragung des Synchronisationssignals nötig. Dadurch dass das Rechteck-Spannungssignal als Ausgangssignal synchron zum Netzsignal erzeugt wurde, ist nun auch das differentielle Impuls-Spannungssignal synchron zu dieser. Der EIA-485-Transmitter TX1 wird gegebenenfalls aus dem Netzteil 2 mit Energie versorgt, üblicherweise mit 3,3 Volt.

Messaufnehmerseitig wird nun das differentielle Synchronisationssignal wieder vom Gleichstromsignal getrennt. Dazu umfasst die erfindungsgemäße Schaltung 1 messaufnehmerseitig einen Operationsverstärker oder einen EIA-485-Receiver RX1 mit differentiellen Eingängen und jeweils einen in mit einem Widerstand R3, R4 in Reihe geschalteten Kondensator C3, C4 zwischen einem Eingang des differentiellen Operationsverstärkers oder des EIA-485-Receiver RX1 und einem Signalleiter 4, 5 als Mittel zur Erzeugung eines Rechteck-Spannungssignals mit Flanken anstelle der Impulse des differentiellen Spannungssignals. C3 und C4 koppeln das differentielle Synchronisationssignal kapazitiv aus. RX1 ist in vorteilhafter Weise auch ein RS485 Standartbaustein und wird dann mit 3,3 Volt vom Messaufnehmer 2 versorgt. C3 und C4 werden benötigt, um die Versorgungsgleichspannung, welche über das Kabel übertragen wird, gegenüber dem Receiver RX1 abzublocken.

Darüber hinaus umfasst die hier dargestellte Schaltung 1 ein Tiefpassglied zwischen jedem Signalleiter 4 und 5 und jeweils einem Eingang des differentiellen EIA-485-Receivers RX1. Die Tiefpassglieder werden in einfacher Weise jeweils gebildet aus zu den Widerständen R3 und R4 parallel geschalteten Kondensatoren C5 und C6. Die Tiefpassglieder filtern unerwünschte Störsignale bereits vor dem EIA-485-Receiver RX1 aus.

Die Kapazitäten der Kondensatoren C1, C2, C3 und C4 betragen dabei höchstens 100µF, insbesondere höchstens 1µF. Die Widerstände R1, R2, R3 und R4 betragen mindestens 10 Ohm, insbesondere mindestens 700 Ohm. Auch das Kabel mit den zwei Signalleitern zwischen Netzteil und Messaufnehmer weist einen Widerstand und gegebenenfalls eine Kapazität auf, z.B. zwischen 20pF/m bis 200pF/m F und 1mOhm/m bis 10Ohm/m. Auf Grund des Kabelwiderstandes sowie des Innenwiderstandes der RS485-Module sowie Leckströmen werden die Kondensatoren entladen. Sie dienen dazu Energie potentialfrei zu übertragen.

Die parallel geschalteten Kondensatoren und Widerstände R3/C5 und R4/C6 bilden ein Tiefpassfilter zur Tiefpassfilterung. Die Kapazitäten der Kondensatoren C5 und C6 betragen dabei höchstens 100µF, insbesondere höchstens 5µF und die Widerstände R3, R4 betragen mindestens 10 Ohm, insbesondere mindestens 700 Ohm.

Hier ist noch ein zusätzliches Mono-Flop IC1 als digitales Gatter zwischen dem Eingang SYNC des Messaufnehmers 2 und dem Ausgang des EIA-485-Receivers RX1 geschaltet. Das Mono-Flop IC1 verhindert, dass mehrere Impulse, z.B. durch Störungen verursacht, zu Fehltriggern führen.

Die Auswertung des Synchronisationssignals, welches am Eingang SYNC des Messaufnehmers anliegt, erfolgt beispielsweise mit einer Software. Diese wendet eine Fenstermethode an, welche die Signale nur in einem vorbestimmten zeitlichen Abschnitt empfängt, um die Schaltung störsicherer zu machen. Erfolgen Störimpulse außerhalb dieses Fensters werden sie ignoriert.

L1 und L2 sind stromkompensierte Drosseln. Sie dienen der Trennung von Gleichstromsignal und differentiellem Impuls-Spannungssignal. Die Spule L1 verhindert dabei, dass das differentielle Impuls-Spannungssignal durch Netzteil des Messumformers kurzgeschlossen wird. Die Spule L2 verhindert, dass das differentielle Impuls-Spannungssignal nicht in ein Netzteil des Messaufnehmers 2 gelangt.

Um die Störanfälligkeit weiter herab zu setzten, sind die Signalleiter 4 und 5 in einem Kabel zusammengefasst, insbesondere in einem Twisted-Pair Kabel miteinander verdrillt. Dabei werden sie von einem Schirm 6 gegen Störungen von Außen abgeschirmt. In der Praxis besteht das Kabel aus zwei TP Paaren. Das erste Paar für die Versorgungsspannung 30VDC/GND und das zweite Paar für eine Busverbindung vom Messaufnehmer zum Messumformer. Das zweite Paar ist nicht erfindungswesentlich und wird deshalb weiter nicht betrachtet.

Störungen von Außen werden einerseits vom Schirm abgeleitet und andererseits durch die Tiefpässe R3/C5 und R4/C6 gedämpft. So genannte Common Mode Störungen werden durch das Twisted-Pair Kabel wesentlich gedämpft. Der differentielle EIA-485-Receiver RX1 ist gegen Common Mode Störungen immun, da dieser ein differentielles Signal zum Empfang benötigt.

Theoretisch könnte diese Schaltung zum Austausch von halbduplex Informationen zwischen Messaufnehmer und Messumformer benutzt werden. Daneben ermöglicht die erfindungsgemäße Schaltung ein Jitter-freies Synchronisationssignal zu übertragen, ohne eine weitere Signalleitung zu benötigen, da das ohnehin vorhandene Versorgungskabel genutzt wird, wobei die Höhe der Versorgungsspannung, hier 30 Volt, keinen Einfluss auf das Synchronisationssignal hat und umgekehrt die Codierung des Synchronisationssignals keinen Einfluss auf die Übertragung des Versorgungssignals hat, es muss beispielsweise nicht Mittelwertfrei zu sein. Dies ist vor allem vorteilhaft bei abgesetzten magnetisch-induktiven Durchflussmessgeräten mit einem Abstand von Messumformer zu Messaufnehmer von mehreren Metern, beispielsweise von bis zu 300 m.

Die erfindungsgemäße Schaltung ist hier lediglich zur Verdeutlichung nicht Bestandteil des Netzteils bzw. des Messaufnehmers. Selbstverständlich können die Schaltungskomponenten der erfindungsgemäßen Schaltung netzteilseitig in das Netzteil bzw. den Messumformer und/oder messaufnehmerseitig in den Messaufnehmer integriert sein, so dass an den Ausgängen des Netzteils bereits das Gleichstromsignal mit dem aufmodulierten differentiellen Synchronisationssignal anliegt und entsprechend dieses Signal an den Eingängen des Messaufnehmers abgegriffen wird, wo es dann intern wieder demoduliert und weiterverarbeitet wird.

Die einzelnen Signale sind in Fig. 2 über die Zeit aufgetragen. Das Signal am SYNC-Ausgang des Netzteils ist hier ein Rechteck-Spannungssignal mit einem Impuls-Pausen-Verhältnis von 1:1 und einem Abstand zwischen zwei ansteigenden Flanken von 20 ms. Es wird vom zweiten Signalverlauf von oben repräsentiert und weist ansteigende Flanken auf, welche zeitgleich zu den positiven Nulldurchgängen des sinusförmigen Netzsignals von 50 Hz sind, dem ersten zeitlichen Verlauf von oben. Anstelle von Null kann auch ein beliebig vorzugebender Schwellwert unter- bzw. überschritten werden, um eine Flanke zu erzeugen.

Als dritten und vierten Signalverlauf sind die Spannungsverläufe an den Kondensatoren C1 und C2 aufgetragen. Die Impulse sind zeitgleich zu den Flanken des Rechteck-Spannungssignals, und damit synchron zu den Nulldurchgängen des Netzsignals. Nicht dargestellt sind die Signalverläufe an den Ausgängen des EIA-485-Transmitters, da der Signalverlauf an einem Ausgang dem Signalverlauf des Rechteck-Spannungssignals entspricht und der der Signalverlauf an dem anderen Ausgang einfach der Invertierten entspricht.

### Bezugszeichenliste

- 1: Schaltung
- 2: Netzteil
- 3: Messaufnehmer
- 4: Erster Signalleiter
- 5: Zweiter Signalleiter
- 6: Schirm

## Patentansprüche

1. Verfahren zur Netzsynchronisation eines magnetisch-induktiven Durchflussmessgeräts mit einem Messaufnehmer und einem Netzteil, wobei ein Gleichstromsignal zur Versorgung des Messaufnehmers vom Netzteil zum Messaufnehmer über zwei Signalleiter übertragen wird,
**gekennzeichnet durch folgende Verfahrensschritte:**
Netzteilseitiges Erzeugen eines differentiellen Synchronisationssignals zur Synchronisation der Durchflussmessung mit der Netzfrequenz;
wobei das differentielle Synchronisationssignal folgendermaßen erzeugt wird:
Erzeugen eines Rechteck-Spannungssignals;
Erzeugen eines differentiellen Spannungssignals als differentielles Synchronisationssignal mit Impulsen zeitgleich zu Flanken des Rechteck-Spannungssignals.
Übertragen des differentiellen Synchronisationssignals über die zwei Signalleiter zum Messaufnehmer;
Messaufnehmerseitiges Trennen des differentiellen Synchronisationssignals und des Gleichstromsignals;
Verarbeiten des differentiellen Synchronisationssignals zur Synchronisation der Durchflussmessung mit der Netzfrequenz.

2. Verfahren nach Anspruch 1,
**dadurch gekennzeichnet,**
**dass** das Rechteck-Spannungssignal mit einer Frequenz gleich der Netzfrequenz erzeugt wird.

3. Verfahren nach einem der Ansprüche 1 oder 2,
**dadurch gekennzeichnet,**
**dass** zur Verarbeitung des differentiellen Synchronisationssignals zur Synchronisation der Durchflussmessung mit der Netzfrequenz folgende Verfahrensschritte durchgeführt werden:
Filterung des differentiellen Synchronisationssignals mit einem Tiefpassfilter, welches so eingestellt ist, dass Impulse mit einer Frequenz oberhalb eines vorgegebenen Schwellwerts aus dem Synchronisationssignal herausgefiltert werden.

4. Verfahren nach einem der Ansprüche 1 bis 3,
**dadurch gekennzeichnet,**
**dass** zur Verarbeitung des differentiellen Synchronisationssignals zur Synchronisation der Durchflussmessung mit der Netzfrequenz folgende Verfahrensschritte durchgeführt werden:
Erzeugen eines Rechteck-Spannungssignals mit Flanken zeitgleich zu den Impulsen des differentiellen Spannungssignals.

5. Schaltung zur Netzsynchronisation eines magnetisch-induktiven Durchflussmessgeräts mit einem Messaufnehmer, einem Netzteil und zwei Signalleitern, zur Übertragung eines Gleichstromsignal vom Netzteil zum Messaufnehmer zur Versorgung des Messaufnehmers,
**dadurch gekennzeichnet,**
**dass** sie netzteilseitig Mittel aufweist, ein differentielles Synchronisationssignals zur Synchronisation der Durchflussmessung mit der Netzfrequenz zu erzeugen, derart dass zunächst einErzeugen eines Rechteck-Spannungssignals erfolgt und sodann ein Erzeugen eines differentiellen Spannungssignals als differentielles Synchronisationssignal mit Impulsen zeitgleich zu Flanken des Rechteck-Spannungssignals erfolgt, und das differentielle Synchronisationssignal auf die zwei Signalleiter zum Messaufnehmer zu übertragen, und, dass sie messaufnehmerseitig Mittel aufweist, das differentielle Synchronisationssignals und das Gleichstromsignal voneinander zu trennen und, dass sie messaufnehmerseitig Mittel aufweist zur Verarbeitung des differentiellen Synchronisationssignals zur Synchronisation der Durchflussmessung mit der Netzfrequenz.

6. Schaltung nach Anspruch 5,
**dadurch gekennzeichnet,**
**dass** sie Mittel aufweist, ein differentielles Spannungssignals als differentielles Synchronisationssignal zu erzeugen, welches äquidistante und netzsynchrone Impulse aufweist.

7. Schaltung nach einem der Ansprüche 5 oder 6,
**dadurch gekennzeichnet,**
**dass** sie Mittel aufweist, das Rechteck-Spannungssignal äquidistant und netzsynchron zu erzeugen und das differentielle Synchronisationssignal als differentielles Spannungssignal mit Impulsen zeitgleich zu den Flanken des Rechteck-Spannungssignals zu erzeugen.

8. Schaltung nach Anspruch 7,
**dadurch gekennzeichnet,**
**dass** das Mittel zur Erzeugung des differentiellen Spannungssignal mit Impulsen anstelle von Flanken des Rechteck-Spannungssignals einen EIA-485-Transmitter und jeweils einen Kondensator zwischen den Ausgängen des EIA-485-Transmitters und jeweils einem Signalleiter umfasst.

9. Schaltung nach Anspruch 8,
**dadurch gekennzeichnet,**
**dass** beide Kondensatoren eine Kapazität von jeweils 100nF bis 100µF aufweisen.

10. Schaltung nach einem der Ansprüche 5 bis 9,
**dadurch gekennzeichnet,**
**dass** sie zur Verarbeitung des differentiellen Synchronisationssignals zur Synchronisation der Durchflussmessung mit der Netzfrequenz messaufnehmerseitig Mittel zur Erzeugung eines Rechteck-Spannungssignals mit Flanken anstelle der Impulse des differentiellen Spannungssignals umfasst.

11. Schaltung nach Anspruch 10,
**dadurch gekennzeichnet,**
**dass** sie zur Erzeugung des Rechteck-Spannungssignals ein EIA-485-Receiver und jeweils einen Kondensator zwischen den Eingängen des EIA-485-Receivers und jeweils einem Signalleiter umfasst.

12. Schaltung nach einem der Ansprüche 10 oder 11,
**dadurch gekennzeichnet,**
**dass** sie zur Erzeugung des Rechteck-Spannungssignals ein Mono-Flop umfasst.

13. Schaltung nach einem der Ansprüche 5 bis 12,
**dadurch gekennzeichnet,**
**dass** sie Spulen an jedem Ende der Signalleiter umfasst, zur Trennung des differentiellen Synchronisationssignals und des Gleichstromsignals.

14. Schaltung nach einem der Ansprüche 5 bis 13,
**dadurch gekennzeichnet,**
**dass** ein Twisted-Pair Kabel zur Übertragung des Gleichstromsignals und des Synchronisationssignals vorgesehen ist, in welchem die zwei Signalleiter miteinander verdrillt sind.

## Claims

1. Procedure for the mains synchronization of an electromagnetic flowmeter with a sensor and a power unit, wherein a DC current signal designed to power the sensor is transmitted from the power unit to the sensor via two signal conductors, **characterized by the following procedure steps:**
Generation on the power unit side of a differential synchronization signal to synchronize the flow measurement with the mains frequency;
wherein the differential synchronization signal is generated as follows:
generation of a rectangular voltage signal;
generation of a differential voltage signal as a differential synchronization signal with pulses at the same time as the edges of the rectangular voltage signal.
Transmission of the differential synchronization signal to the sensor via the two signal conductors;
Separation on the sensor side of the differential synchronization signal and the DC current signal;
Processing of the differential synchronization signal for the synchronization of flow measurement with the mains frequency.

2. Procedure as claimed in Claim 1,
**characterized in that**
the rectangular voltage signal is generated at a frequency equal to the mains frequency.

3. Procedure as claimed in one of the Claims 1 or 2,
**characterized in that**
the following process steps are performed to process the differential synchronization signal with the view to synchronizing the flow measurement with the mains frequency:
Filtering of the differential synchronization signal with a low-pass filter, which is configured in such a way that pulses with a frequency above a predefinable threshold are filtered out of the synchronization signal.

4. Procedure as claimed in one of the Claims 1 to 3,
**characterized in that**
the following process steps are performed to process the differential synchronization signal with a view to synchronizing the flow measurement with the mains frequency:
Generation of a rectangular voltage signal with edges at the same time as the pulses of the differential voltage signal.

5. Circuit for the mains synchronization of an electromagnetic flowmeter comprising a sensor, a power unit and two signal conductors, designed for the transmission of a DC current signal from the power unit to the sensor in order to power the sensor,
**characterized in that**
it comprises, on the power unit side, means to generate a differential synchronization signal with a view to synchronizing the flow measurement with the mains frequency, in such a way that a rectangular voltage signal is first generated and a differential voltage signal is then generated as a differential synchronization signal with pulses at the same time as the edges of the rectangular voltage signal, and to transmit the differential synchronization signal over the two signal conductors to the sensor,
and that it comprises, on the sensor side, means to separate the differential synchronization signal from the DC current signal, and that it comprises, on the sensor side, means to process the differential synchronization signal for the synchronization of the flow measurement with the mains frequency.

6. Circuit as claimed in Claim 5,
**characterized in that**
it has means to generate a differential voltage signal as a differential synchronization signal, which has equidistant pulses that are synchronized with the mains.

7. Circuit as claimed in one of the Claims 5 or 6,
**characterized in that**
it has means to generate the rectangular voltage signal in a manner that is equidistant and synchronized with the mains, and to generate the differential synchronization signal as a differential voltage signal with pulses at the same time as the edges of the rectangular voltage signal.

8. Circuit as claimed in Claim 7,
**characterized in that**
the means to generate the differential voltage signal with pulses instead of edges of the rectangular voltage signal comprises an EIA 485 transmitter and a capacitor located in each case between the outputs of the EIA 485 transmitter and a signal conductor in each case.

9. Circuit as claimed in Claim 8,
**characterized in that**
both capacitors have a capacity of 100 nF to 100 µF.

10. Circuit as claimed in one of the Claims 5 to 9,
**characterized in that**
for the purpose of processing the differential synchronization signal with a view to synchronizing the flow measurement with the mains frequency, it has means, on the sensor side, to generate a rectangular voltage signal with edges instead of the pulses of the differential voltage signal.

11. Circuit as claimed in Claim 10,
**characterized in that**
for the purpose of generating the rectangular voltage signal, it has an EIA 485 receiver and a capacitor located in each case between the inputs of the EIA 485 receiver and a signal conductor.

12. Circuit as claimed in one of the Claims 10 or 11,
**characterized in that**
it comprises a mono flop for the generation of the rectangular voltage signal.

13. Circuit as claimed in one of the Claims 5 to 12,
**characterized in that**
it comprises coils at each end of the signal conductor to separate the synchronization signal and the DC current signal.

14. Circuit as claimed in one of the Claims 5 to 13,
**characterized in that**
a twisted pair cable is provided for the transmission of the DC current signal and the synchronization signal, wherein in said cable the two signal conductors are twisted together.

## Revendications

1. Procédé destiné à la synchronisation avec le réseau d'un débitmètre magnéto-inductif avec un capteur et un bloc d'alimentation, un signal de courant continu étant transmis du bloc d'alimentation vers le capteur, via deux conducteurs de signal, en vue de l'alimentation du capteur,
**caractérisé par les étapes de procédé suivantes** :
Génération côté bloc d'alimentation d'un signal de synchronisation différentiel en vue de la synchronisation de la mesure de débit avec la fréquence du réseau ;
le signal de synchronisation différentiel étant généré comme suit :
Génération d'un signal de tension rectangulaire ;
Génération d'un signal de tension différentiel en tant que signal de synchronisation différentiel avec des impulsions simultanées par rapport aux fronts du signal de tension rectangulaire.
Transmission du signal de synchronisation différentiel au capteur via les deux conducteurs de signal ;
Séparation côté capteur du signal de synchronisation différentiel et du signal de courant continu ;
Traitement du signal de synchronisation différentiel en vue de la synchronisation de la mesure de débit avec la fréquence du réseau.

2. Procédé selon la revendication 1,
**caractérisé**
**en ce que** le signal de tension rectangulaire est généré avec une fréquence égale à la fréquence du réseau.

3. Procédé selon l'une des revendications 1 ou 2,
**caractérisé**
**en ce que** l'étape de procédé suivante est exécutée pour le traitement du signal de synchronisation différentiel en vue de la synchronisation de la mesure de débit avec la fréquence du réseau :
Filtrage du signal de synchronisation différentiel avec un filtre passe-bas, lequel est réglé de telle sorte à éliminer par filtrage du signal de synchronisation les impulsions présentant une fréquence supérieure à un seuil prédéfini.

4. Procédé selon l'une des revendications 1 à 3,
**caractérisé**
**en ce que** l'étape de procédé suivante est exécutée pour le traitement du signal de synchronisation différentiel en vue de la synchronisation de la mesure de débit avec la fréquence du réseau :
Génération d'un signal de tension rectangulaire avec des fronts simultanés par rapport aux impulsions du signal de tension différentiel.

5. Circuit destiné à la synchronisation avec le réseau d'un débitmètre magnéto-inductif comprenant un capteur, un bloc d'alimentation et deux conducteurs de signal, destinés à la transmission d'un signal de courant continu du bloc d'alimentation vers le capteur, en vue de l'alimentation du capteur,
**caractérisé**
**en ce qu'**il comprend, côté réseau, des moyens destinés à générer un signal de synchronisation différentiel en vue de la synchronisation de la mesure de débit avec la fréquence du réseau, de telle sorte qu'intervient dans un premier temps une génération d'un signal de tension rectangulaire, puis une génération d'un signal de tension différentiel en tant que signal de synchronisation différentiel avec des impulsions simultanées par rapport aux fronts du signal de tension rectangulaire, et à transmettre le signal de synchronisation différentiel aux deux conducteurs de signal vers le capteur,
et **en ce qu'**elle comporte, côté capteur, des moyens destinés à séparer le signal de synchronisation différentiel du signal de courant continu, et **en ce qu'**elle comporte, côté capteur, des moyens destinés au traitement du signal de synchronisation différentiel en vue de la synchronisation de la mesure de débit avec la fréquence du réseau.

6. Circuit selon la revendication 5,
**caractérisé**
**en ce qu'**il comporte un moyen destiné à générer un signal de tension différentiel en tant que signal de synchronisation différentiel, lequel présente des impulsions équidistantes et synchrones avec le réseau.

7. Circuit selon l'une des revendications 5 ou 6,
**caractérisé**
**en ce qu'**il comporte des moyens destinés à générer le signal de tension rectangulaire équidistant et synchrone avec le réseau, et à générer le signal de synchronisation différentiel en tant que signal de tension différentiel avec des impulsions simultanées par rapport aux fronts du signal de tension rectangulaire.

8. Circuit selon la revendication 7,
**caractérisé**
**en ce que** le moyen, destiné à la génération du signal de tension différentiel avec des impulsions au lieu de fronts du signal de tension rectangulaire, comprend un émetteur EIA 485 et respectivement un condensateur entre les sorties de l'émetteur EIA 485 et chaque conducteur de signal.

9. Circuit selon la revendication 8,
**caractérisé**
**en ce que** les deux condensateurs présentent chacun une capacité de 100 nF à 100 µF.

10. Circuit selon l'une des revendications 5 à 9,
**caractérisé**
**en ce qu'**il comporte, pour le traitement du signal de synchronisation différentiel en vue de la synchronisation de la mesure de débit avec la fréquence du réseau, des moyens côté capteur destinés à la génération d'un signal de tension rectangulaire avec des fronts au lieu des impulsions du signal de tension différentiel.

11. Circuit selon la revendication 10,
**caractérisé**
**en ce qu'**il comporte, pour la génération du signal de tension rectangulaire, un récepteur EIA 485 et respectivement un condensateur entre les entrées du récepteur EIA 485 et chacun des conducteurs de signal.

12. Circuit selon l'une des revendications 10 ou 11,
**caractérisé**
**en ce qu'**il comporte un mono flop en vue de la génération du signal de tension rectangulaire.

13. Circuit selon l'une des revendications 5 à 12,
**caractérisé**
**en ce qu'**il comporte des bobines à chaque extrémité des conducteurs de signal, en vue de la séparation du signal de synchronisation et du signal de courant continu.

14. Circuit selon l'une des revendications 5 à 13,
**caractérisé**
**en ce qu'**est prévu, pour la transmission du signal de courant continu et du signal de synchronisation, un câble à paire torsadée, dans lequel les deux conducteurs de signal sont torsadés.
